# EUROPÄISCHE PATENTSCHRIFT

(11) **EP 2 429 758 B1**
(45) Veröffentlichungstag und Bekanntmachung des Hinweises auf die Patenterteilung: **31.07.2013**
(21) Anmeldenummer: 10725370.0
(22) Anmeldetag: 08.05.2010
(51) Int. Cl.: B23Q 3/08

(54) **VORRICHTUNG UND VERFAHREN ZUM FIXIEREN EINES BAUTEILS AN EINEM BAUTEILTRÄGER**
APPARATUS AND METHOD FOR FIXING A COMPONENT TO A COMPONENT CARRIER
PROCÉDÉ ET DISPOSITIF POUR FIXER UN COMPOSANT SUR UN SUPPORT

(30) Priorität: 14.05.2009 DE 102009021418
(43) Veröffentlichungstag der Anmeldung: 21.03.2012
(73) Patentinhaber: MTU Aero Engines GmbH, 80995 München (DE)
(72) Erfinder: FESSLER-KNOBEL, Martin, 81543 München (DE); HUTTNER, Roland, 82287 Jesenwang (DE)
(86) Internationale Anmeldenummer: PCT/DE2010/000521
(87) Internationale Veröffentlichungsnummer: WO 2010/130249

(56) Entgegenhaltungen:
- WO-A2-2004/014587
- DE-A1-102007 020 957
- DE-C1- 10 029 682
- US-A1- 2002 049 028

## Beschreibung

Die Erfindung betrifft eine Vorrichtung zum Fixieren eines Bauteils an einem Bauteilträger nach dem Oberbegriff des Patentanspruchs 1 und ein Verfahren zum Fixieren eines Bauteils an einem derartigen Bauteilträger.

Bauteile durchlaufen häufig bis zur Erreichung ihrer Endform eine Vielzahl von Bearbeitungsstationen. Die Positionierung der Bauteile in den Bearbeitungsstationen erfolgt über Bauteilträger, in denen die Bauteile fixiert werden. Die Fixierung der Bauteile in den Bauteilträgem muss schnell und sicher erfolgen sowie einfach lösbar sein.

Die deutsche Patentanmeldung DE 10 2007 020 957 A1 der Anmelderin schlägt beispielsweise eine auf einer Klebeverbindung basierende Fixierung einer Turbinenschaufel auf einem Bauteilträger vor. Der Bauteilträger hat eine konturnahe Klebefläche, auf die ein Klebemittel großflächig aufgetragen wird. Nach dem Auftragen des Klebemittels wird die Turbinenschaufel auf dem Bauteilträger positioniert und eine thermische Aushärtung des Klebemittels durchgeführt.

Diese bekannte Lösung erlaubt zwar eine sichere Fixierung der Turbinenschaufel, jedoch kann die Klebung durch bei der Bearbeitung entstehende Wärme geschwächt werden.

Das deutsche Patent DE 100 29 682 C1 beschreibt eine Fixierung eines Bauteils auf einem Bauteilträger mittels einer Klebeverbindung, die durch elektromagnetische Strahlung aushärtbar bzw. lösbar ist. Ein hierfür notwendiges strahlungsaushärtendes Klebemittel wird großflächig auf einer für die elektromagnetische Strahlung durchlässigen Klebefläche des Bauteilträgers angeordnet. Das Bauteil wird auf der Klebefläche positioniert und anschließend das Klebemittel durch die Klebefläche hindurch mit einer Strahlungsquelle bestrahlt. Nachteilig an dieser Fixierung ist, dass der Bauteilträger eine zum Beispiel UV-Strahlung durchlässige Klebefläche aufzuweisen hat. Zur Vermeidung von Reflektionen im Bereich der Klebefläche ist die Klebefläche entsprechend zu behandeln, wodurch die Klebung geschwächt wird.

Die WO 2004/014587 zeigt eine Fixierung eines Bauteils auf einem Bauteilträger, die ebenfalls auf einem strahlungsaushärtenden Klebemittel basiert. Die Strahlung wird über Lichtleiter zum Klebemittel geführt. Nachteilig an dieser Lösung ist insbesondere die vorrichtungstechnische Komplexität.

Aufgabe der Erfindung ist es, eine Vorrichtung und ein Verfahren zum Fixieren eines Bauteils an einem Bauteilträger zu schaffen, die die vorgenannten Nachteile beseitigen und eine hohe Festigkeit der Klebung erlauben.

Diese Aufgabe wird gelöst durch eine Vorrichtung zum Fixieren eines Bauteils an einem Bauteilträger mit den Merkmalen des Patentanspruchs 1 und durch ein Verfahren zum Fixieren eines Bauteils an einem Bauteilträger nach dem Patentanspruch 12.

Eine erfindungsgemäße Vorrichtung zum Fixieren eines Bauteils hat einen Bauteilträger zum Halten des Bauteils und zumindest eine Strahlungsquelle zum Aushärten eines zwischen dem Bauteilträger und dem Bauteil angeordneten Klebemittels mittels elektromagnetischer Strahlung. Erfindungsgemäß ist die Strahlung auf zumindest eine Flanke des Klebemittels gerichtet.

Bei dieser Lösung ist die Strahlung nicht auf eine bauteilträgerseitige Klebefläche gerichtet und dringt durch diese in das Klebemittel ein, sondern erfindungsgemäß wird das Klebemittel seitlich bestrahlt. Ein Vorteil der seitlichen Bestrahlung besteht darin, dass das Material zur Bildung der Klebefläche frei gewählt werden kann und nicht zum Beispiel auf Glas beschränkt ist. Dies ermöglicht eine wesentlich größere Gestaltungsfreiheit für den Bauteilträger, wodurch nur geringe Herstellungskosten anfallen.

Bevorzugterweise ist die Klebefläche des Bauteilträgers aus einem strahlungsundurchlässigen Material gebildet. Hierdurch können Materialien eingesetzt werden, die im Vergleich zu bekannten Klebeflächen aus Glas eine höhere Festigkeit der Klebung ermöglichen, bspw. Werkzeugstahl. Somit kann die Größe der Klebefläche und insbesondere die Menge des Klebemittels reduziertoder eine erhöhte Klebekraft pro Fläche vorgesehen werden.

Bei einem Ausführungsbeispiel ist die Klebefläche band- bzw. streifenartig. Diese bandartige im Vergleich zum Bauteil schmale Form der Klebefläche ermöglicht eine sichere Fortsetzung der Strahlung durch das Klebemittel hindurch und somit eine sichere Aushärtung. Bevorzugterweise ist die Klebefläche konturnah zu einem aufzunehmenden Bauteilabschnitt, so dass zwischen der Klebefläche und dem Bauteil ein gleichmäßiger Klebespalt einstellbar ist.

Bei einem anderen Ausführungsbeispiel hat der Bauteilträger eine Vielzahl von Erhebungen zum Auftragen des Klebemittels. Durch die Erhebungen werden Kanäle zwischen dem Bauteilträger und dem Bauteil gebildet, in denen die Strahlung reflektiert wird. Somit greift die Strahlung an sämtlichen Flanken bzw. Seitenflächen des Klebemittels an und nicht nur an den Flanken, auf die die Strahlung unmittelbar gerichtet ist.

Die Aushärtung des Klebemittels lässt sich beschleunigen, wenn zwei Strahlungsquellen gegenüber entgegengesetzten Flanken des Klebemittels angeordnet sind.

Bei einem weiteren Ausführungsbeispiel weist der Bauteilträger ein Gitter zum Auftragen des Klebemittels auf. Hierdurch wird eine Vielzahl von steg- bzw. linienartigen Klebeflächen geschaffen. Bevorzugterweise ist die Strahlungsquelle an einer von dem Bauteil abgewandten Seite des Gitters positioniert. Alternativ können auch zwei Strahlungsquellen vorgesehen sein, wobei im Bereich der Strahlungsquellen jeweils eine Öffnung vorgesehen ist. Die Strahlung wird in Zwischenräumen bzw. Maschen des Gitters reflektiert, so dass durch die Reflektion und die stegartige Form der Klebeflächen auch in Schatten des Gitters eine Aushärtung des Klebemittels erfolgt.

Zur Einstellung des jeweiligen Klebespaltes zwischen dem Bauteilträger und dem Bauteil ist es aus fertigungstechnischer Sicht vorteilhaft, wenn der Bauteilhalter über Abstandshalter zur Auflage des Bauteils verfügt.

Bei einem erfindungsgemäßen Verfahren zum Fixieren eines Bauteils an einem Bauteilträger wird ein strahlungsaktivierbares Klebemittel zwischen dem Bauteilträger und dem Bauteil vorgesehen. Anschließend wird das Bauteil zum Bauteilträger positioniert und das Klebemittel wird seitlich mit elektromagnetischer Strahlung beaufschlagt.

Sonstige vorteilhafte Ausführungsbeispiele sind Gegenstand weiterer Unteransprüche.

Im Folgenden werden bevorzugte Ausführungsbeispiele der Erfindung anhand schematischer Darstellungen näher erläutert. Es zeigen
Figuren 1 und 2 Ansichten eines ersten Ausführungsbeispiels der Erfindung,
Figuren 3 und 4 Ansichten eines zweiten Ausführungsbeispiels der Erfindung,
Figuren 5 und 6 Ansichten eines dritten Ausführungsbeispiels der Erfindung, und
Figuren 7 und 8 Ansichten eines vierten Ausführungsbcispiels der Erfindung.

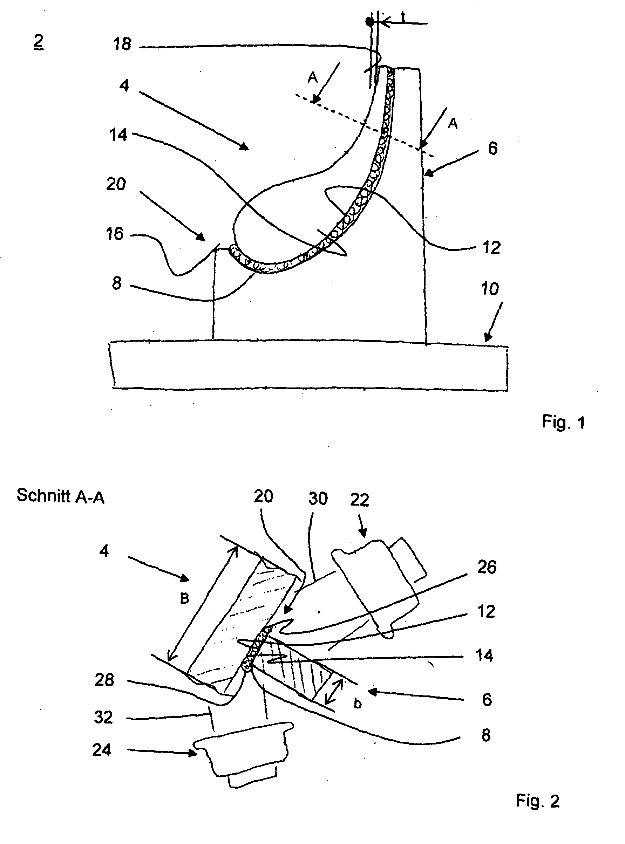

Figur 1 zeigt eine Seitenansicht einer ersten erfindungsgemäßen Vorrichtung 2 zum Fixieren eines Bauteils 4 mittels Klebung in einem Bauteilträger 6. Das Bauteil 4 ist beispielhaft als eine Schaufel einer Turbine, insbesondere eines Flugzeugtriebwerks, dargestellt und wird in diesem und in den weiteren Ausführungsbeispielen als solche bezeichnet. Die Klebung basiert auf einem strahlungsaktivierbaren Klebemittel 8, das insbesondere mittels elektromagnetischer Strahlung aushärtbar bzw. lösbar ist.

Der Bauteilträger 6 ist auf einer Grundplatte 10 montiert und hat eine konkave bzw. sichelförmige Klebefläche 12 zur Aufnahme der Schaufel 4. Die Klebefläche 12 ist konturnah zu einem der Klebefläche 12 zugewandten konvexen Saugseitenabschnitt 14 der Schaufel 4 ausgebildet. In dem gezeigten Ausführungsbeispiel erstreckt sich die Klebefläche 12 von einer Anströmkante 16 der Schaufel 4 bis zu einer Strömungsabrisskante 18.

Die Fixierung der Schaufel 4 erfolgt mittels des Klebemittels 8, das zwischen der Klebefläche 12 und dem Saugseitenabschnitt 14 angeordnet ist und im ausgehärteten Zustand eine Klebeverbindung zwischen dem Bauteilträger 6 und der Schaufel 4 herstellt. Das Klebemittel 8 definiert einen Klebespalt 20 mit der Tiefe t und wird im Wesentlichen gleichmäßig über die gesamte Klebefläche 12 aufgetragen. Zusätzlich dient es als Toleranzausgleich zwischen der Klebefläche 12 und dem Saugseitenabschnitt 14.

Figur 2 zeigt eine Schnittdarstellung durch das erste Ausführungsbeispiel nach Figur 1 entlang der Schnittlinie A-A. Zum Aushärten des Klebemittels 8 sind zwei Lichtquellen 22, 24 (Strahlungsquellen) vorgesehen, die zueinander entgegengesetzte Flanken 26, 28 des Klebemittels 8 mit Strahlung 30, 32 beaufschlagen. Die Lichtquellen 22, 24 emittieren elektromagnetische Strahlung 30, 32 wie UltraViolettes-Licht (UV-Licht) oder Infrarot-Strahlung. Sie sind jeweils gegenüber einer der Flanken 26, 28 positioniert, so dass das Klebemittel 8 erfindungsgemäß seitlich und nicht durch die Klebefläche 12 hindurch bestrahlt wird.

Die Klebefläche 12 wird von einer streifenartigen Stirnfläche des Bauteilträgers 6 gebildet. Sie besteht aus einem Material, das für elektromagnetische Strahlung undurchlässig ist, und weist eine Breite b auf, die um ein Vielfaches kleiner als eine Breite B der Schaufel 4 ist.

Der Klebespalt 20 erstreckt sich über die gesamte Breite b der Klebefläche 12. Vorzugsweise hat der Klebespalt 20 ein Tiefen-Breiten-Verhältnis von etwa 1:10, wobei die Ziffer "1" für die Tiefe t und die Ziffer "10" für die Breite b steht.

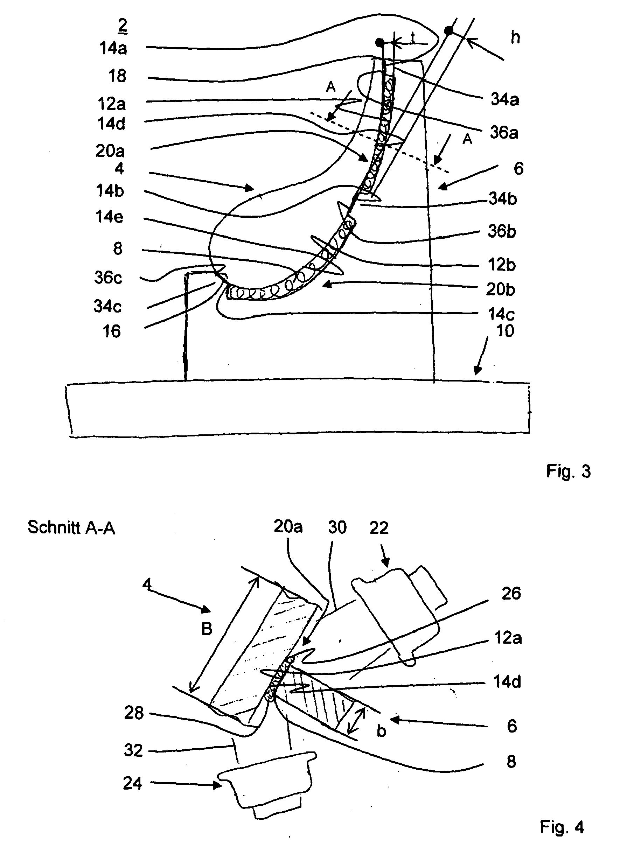

Figur 3 zeigt eine Seitenansicht eines zweiten Ausrührungsbeispiels einer erfindunggemäßen Vorrichtung 2 zum Fixieren einer Schaufel 4 in einem Bauteilträger 6 mittels eines strahlungsaktivierbaren Klebemittels 8. Im Unterschied zum ersten Ausführungsbeispiel nach den Figuren 1 und 2 sind zur Positionierung der Schaufel 4 an dem Bauteilträger 6 drei Abstandshalter 34a, 34b, 34c vorgesehen.

Die Abstandshalter 34a, 34b, 34c erstrecken sich von einer Stirnfläche des Bauteilträgers 6 in Richtung der aufzunehmenden Schaufel 4. Ihre Höhe h entspricht der Tiefe t eines einzustellenden Abstandes zwischen der Schaufel 4 und dem Bauteilträger 6. Sie haben jeweils eine Anlagefläche 36a, 36b, 36c, die komplementär zum aufzunehmenden Saugseiteabschnitt 14a, 14b, 14c der Schaufel 4 ausgebil det ist. Vorzugsweise greift jeweils ein Abstandshalter 34a, 34c im Bereich einer Anströmkante 16 und im Bereich einer Strömungsabrisskante 18 der Schaufel 4 an. Ein Abstandhalter 34b ist in der Mitte zwischen diesen beiden äußeren Abstandshaltem 34a, 34c angeordnet und unterteilt den einteiligen Klebespalt 20 aus den Figur 1 und 2 in zwei Klebespalte 20a, 20b, denen jeweils eine bauteilträgerseitige Klebefläche 12a, 12b zugeordnet ist. Die Klebeflächen 12a, 12b sind kontumah zu gegenüberliegenden Saugseitenabschnitten 14d, 14e ausgebildet.

Gemäß der Schnittdarstellung in Figur 4 erfolgt die Bestrahlung des Klebemittels 8 entsprechend dem ersten Ausführungsbeispiel seitlich durch zwei gegenüber positionierte Lichtquellen 22, 24, die UV-Strahlung 30, 32 emittieren. Ebenfalls weisen die Klebeflächen 12a, 12b die gleiche streifenartige Gestalt sowie die Klebespalte 20a, 20b das gleiche Tiefen-Breiten-Verhältnis von 1:10 wie die Klebefläche 12 bzw. der Klebespalt 20 des ersten Ausführungsbeispiels auf.

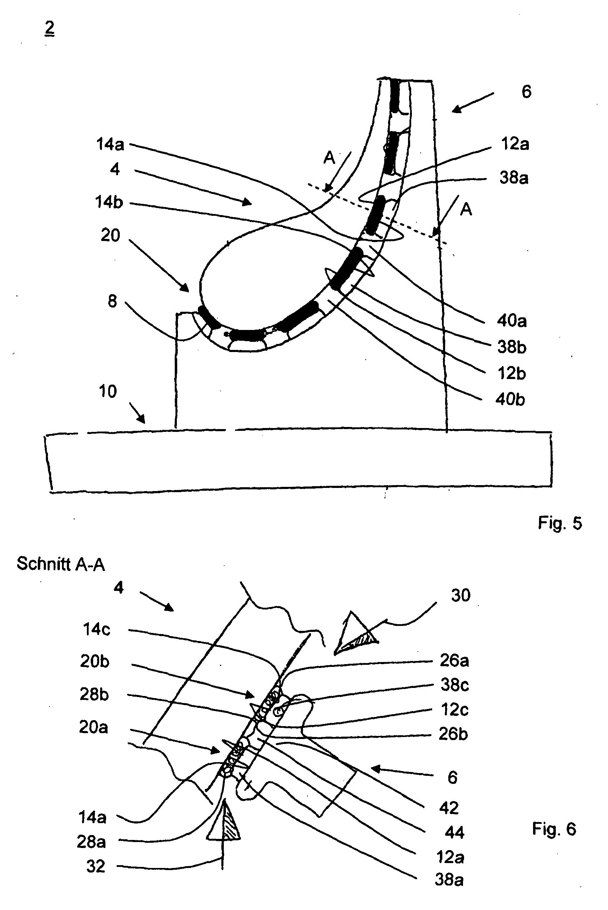

Figur 5 zeigt eine Seitenansicht eines dritten Ausführungsbeispiels einer erfindungsgemäßen Vorrichtung 2 zum Fixieren einer Schaufel 4 an einem Bauteilträger 6 mittels eines strahlungsaktivierbaren Klebemittels 8.

Der Bauteilträger 6 ist auf einer Grundplatte 10 montiert und hat eine Vielzahl von noppenartigen Erhebungen 38a, 38b,... an deren Stirnflächen jeweils eine Klebefläche 12a, 12b,... zum Auftragen eines Klebemittels 8 ausgebildet ist. Die Klebeflächen 12a, 12b,... sind kontumah zu einem ihnen jeweils gegenüberliegenden Saugseitenabschnitt 14a, 14b,... der Schaufel 4 ausgebildet und für elektromagnetische Strahlung 30, 32 (s. Fig. 6) undurchdringbar. Zwischen den Erhebungen 38a, 38b,... ist eine Vielzahl von sich senkrecht zur Zeichenebene erstreckenden Querkanälen 40a, 40b,... geschaffen.

Gemäß der Schnittdarstellung in Figur 6 sind die Erhebungen 38a, 38c,... in zwei Reihen nebeneinander an einem T-artig erweiterten Körperabschnitt 42 des Bauteilträges 6 angeordnet. Sie sind über einen Längskanal 44 voneinander beabstandet, der in Querrichtung der Querkanäle 40a, 40b,... verläuft und mit diesen in Wirkverbindung steht. Somit sind quasi zwei parallele Klebespalte 20a, 20b geschaffen, die jeweils aus einer Vielzahl von einzelnen Klebungen zwischen den Klebeflächen 12a, 12c,... und den gegenüberliegenden Saugseitenabschnitten 14a, 14c,... bestehen. Jede Klebung weist das vorgenannte Tiefen-Breiten-Verhältnis von 1:10 auf.

Die elektromagnetische Strahlung 30, 32 zum Aktivieren des Klebemittels 8 ist seitlich auf zueinander entgegengesetzte Flanken 26a, 28a,... der jeweiligen Klebung gerichtet und wird in den Kanälen 40a, 40b,..., 44 zwischen den Erhebungen 38a, 38b,... reflektiert. Die Reflektionen bewirken, dass jede Klebung von sämtlichen offenen Flanken 26a, 26b, ..., 28a, 28b,... bzw. Seiten bestrahlt wird. Somit sind nicht nur die Flanken 26a, 28a,... der Strahlung 30, 32 ausgesetzt, die den nicht dargestellten Lichtquellen unmittelbar gegenüberliegen.

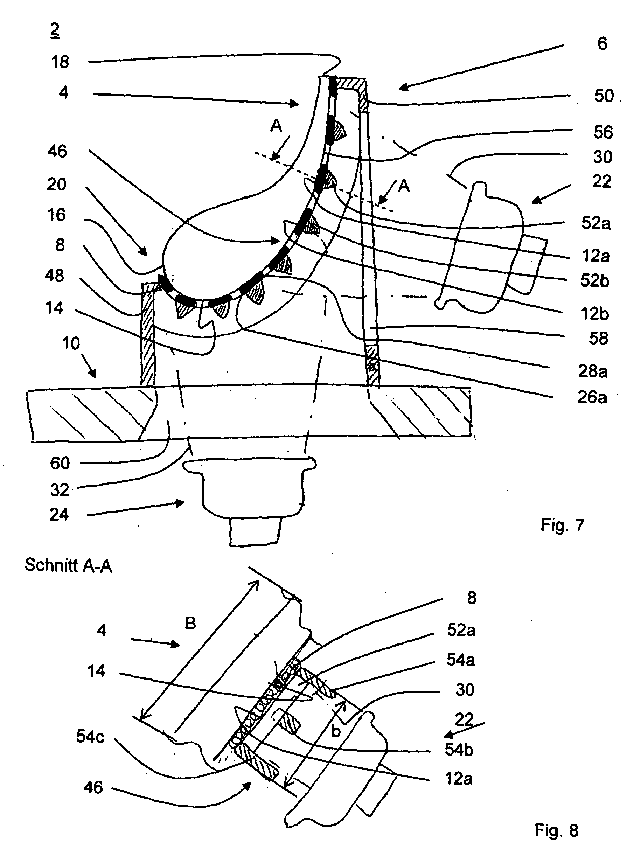

Figur 7 zeigt ein viertes erfindungsgemäßes Ausführungsbeispiel einer Vorrichtung 2 zum Fixieren einer Schaufel 4 an einem Bauteilträger 6 mittels eines strahlungsaktivierbaren Klebemittels 8.

Der Bauteilträger 6 hat ein Gitter 46, dass von zwei Stützen getragen wird, von denen eine als Kurzstütze 48 und eine als Langstütze 50 ausgebildet ist. Die Stützen 48, 50 sind mit einem Fußabschnitt auf einer Grundplatte 10 montiert und so weit voneinander beabstandet, dass die Kurzstütze 48 im Bereich einer Anströmkante 16 und die Langstütze 50 im Bereich einer Strömungsabrisskante 18 der Schaufel 4 angeordnet ist.

Das Gitter 46 hat eine einem gegenüberliegenden Saugseitenabschnitt 14 der Schaufel 4 entsprechende Gestalt und erstreckt sich zwischen Kopfabschnitten der Stützen 48, 50. Es hat eine Vielzahl von Querstegen 52a, 52b,..., zwischen denen klebemittelfreie Zwischen räume 56 bzw. Maschen gebildet sind. Das Klebemittel 8 wird auf die Querstege 52a, 52b,... und auf in Figur 8 gezeigte Längsstege 54a, 54c, zur Bildung linienartiger Klebeflächen 12a, 12b,... aufgetragen. Es hat eine derartige Viskosität, dass es vor der Aushärtung auf den Stegen 52a, 52b,... 54a, 54c haften bleibt und nicht in die Zwischenräume 56 abfließt.

Zur Aushärtung des Klebemittels 18 sind zwei, elektromagnetische Strahlung 30, 32 emittierende, Lichtquellen 22, 24 vorgesehen. Die Lichtquellen 22, 24 sind jeweils an eine von der Schaufel 4 abgewandten Seite des Bauteilträgers 6 und der Grundplatte 10 positioniert. Somit sind sie von der Schaufel 4 aus betrachtet hinter der Langstütze 50 und unterhalb der Grundplatte 10 angeordnet. Die Stützen 48, 50 sowie die Grundplatte 10 bestehen aus einem für elektromagnetische Strahlung nicht durchlässigem Material, so dass zur Bestrahlung der Schaufel 4 im Bereich der Lichtquellen 22, 24 jeweils eine Öffnung 58, 60 in der Langstütze 50 und in der Grundplatte 10 vorgesehen ist.

Die Strahlung 30, 32 tritt in die Zwischenräume 56 ein, wird an den Stegen 52a, 52b,... 54a, 54b,... und dem Saugseitenabschnitt 14 reflektiert und tritt über Flanken 26a, 28a,... seitlich in das Klebemittel 8 ein. Die Aushärtung wird initiiert und setzt sich in die Bereiche des Klebemittels 8 fort, die nicht unmittelbar von der Strahlung beaufschlagt werden, wie beispielsweise Schatten des Gitters 46.

Gemäß der Schnittdarstellung in Figur 8 sind die Querstege 52a, 52b,... über drei Längsstege 54a, 54b, 54c miteinander verbunden. Die beiden äußeren Längsstege 54a, 54c sind gegenüber dem mittleren Längssteg 54b in Richtung der hinteren Lichtquelle 22 verlängert ausgebildet und konzentriert die Strahlung 30, 32 auf das Gitter 46. Somit wird die Strahlung 30, 32 zwischen den beiden äußeren Längsstegen 54a, 54c geführt.

Das Gitter 46 hat gemäß der Ansicht in Figur 8 eine wesentlich geringere Breite b als die Schaufel 4. Es besteht aus einem Material, dass undurchlässig für elektromagnetische Strahlung ist.

Bei einem erfindungsgemäßen Verfahren wird auf die Klebefläche 12, 12a,... eines Bauteilträgers 6 ein strahlungsaktivierbares Klebemittel 8 aufgetragen. Dann wird ein Bauteil 4 zum Bauteilträger 6 und somit zum Klebemittel 8 mit einem definierten, für eine Klebung vorteilhaften Spalt positioniert. Anschließend werden Lichtquellen 22, 24 angesteuert und das Klebemittel 18 seitlich bzw. deren Flanken 26, 28,... mit elektromagnetischer Strahlung 30, 32 beaufschlagt bis der geforderte Aushärtegrad erreicht ist. Nach der Aushärtung ist das Bauteil 4 auf dem Bauteilträger fixiert und die jeweilige Bearbeitung, bspw. eine Fräsbearbeitung des Schaufelfußes, kann durchgeführt werden.

Nach der Beendigung der Bearbeitung wird die Klebeverbindung zwischen dem Bauteilträger 6 und dem Bauteil 4 chemisch, thermisch, mechanisch oder durch erneutes Beaufschlagen mit elektromagnetischer Strahlung 30, 32 gelöst. Ein thermisches Aufheben der Klebeverbindung erfolgt bevorzugterweise induktiv.

Bei sämtlichen Ausführungsbeispielen weist die Grundplatte 10 ein nicht gezeigtes Spannsystem wie ein Nullpunktspannsystem mit Magnet-, Vakuum-, Keilspannung oder Absteckung auf. Die Adaption des Bauteilträgers 6 auf der Grundplatte 10 erfolgt vorzugsweise generativ mittels einer Schnittstelle zur Grundplatte 10. Der Bauteilträger 6 ist beispielsweise ein Fertigungs-, Guss-, Schmiede- oder Frästeil. Die Positionierung des Bauteils 4 auf dem Bauteilträger 6 erfolgt absolut oder relativ zum Datum der Grundplatte 10.

Bei sämtlichen beschriebenen Ausülhrungsbeispielen besteht der Bauteilträger 6 im Bereich seiner Klebefläche 12, 12a,... aus einem Material, durch das elektromagnetische Strahlung nicht hindurch treten kann. Beispielhafte Materialien sind Metall und Keramik. Das Material der Klebefläche 12, 12a,... ist jedoch sowohl für die erfindungsgemäße Vorrichtung 2 als auch für das erfindungsgemäße Verfahren unbeachtlich, so dass ebenfalls ein Material wie Glas vorstellbar ist, dass elektromagnetische Strahlung durchlässt.

Das Klebemittel 8 kann neben einer Aktivierung mit UV-Strahlung auch mittels Infrarot-Strahlung, Ultraschall-Strahlung, Röntgen-Strahlung oder sichtbarem Licht aktivierbar sein. Ebenso sind anaerobe, aerobe und/oder 2-komponentige Klebemittel 8 vorstellbar.

Das Tiefen-Breiten-Verhältnis des Klebespalts 20 ist nicht auf 1:10 beschränkt, sondern es sind auch andere Verhältnisse vorstellbar. Im Wesentlichen richtet sich das Tiefen-Breiten-Verhältnis nach der chemischen Zusammensetzung bzw. den Komponenten des Klebemittels 8 und der Art, Intensität und Dauer der Strahlung.

Offenbart ist eine Vorrichtung zum Fixieren eines Bauteils 4 an einem Bauteilträger 6 mittels eines strahlungsaushärtenden Klebemittels 8, bei der Strahlung 30, 32 zur Aushärtung des Klebemittels 8 zwischen dem Bauteilträger 6 und dem Bauteil 4 seitlich einbringbar ist, sowie ein Verfahren zum Fixieren eines Bauteils 4 an einem Bauteilträger 6 mittels einer lösbaren Klebeverbindung.

## Patentansprüche

1. Vorrichtung zum Fixieren eines Bauteils (4) an einem Bauteilträger (6), mit einem Bauteilträger(6) mit einem strahlungsaktivierbaren Klebmittel (8) zwischen dem Bauteilträger (6) und dem Bauteil (4) und mit zumindest einer Strahlungsquelle (22, 24), die elektromagnetische Strahlung (30, 32) zum Aushärten eines zwischen dem Bauteil (4) und dem Bauteilträger (6) angeordneten Klebemittels (8) emittiert, **dadurch gekennzeichnet, dass** die Strahlungsquelle (22, 24) derart angeordnet ist, dass die Strahlung (30, 32) auf zumindest eine Flanke (26, 28,...) des Klebemittels (8) gerichtet ist, so dass das Klebemittel (8) seitlich und nicht durch die Klebefläche (12) hindurch bestrahlt wird.

2. Vorrichtung nach Anspruch 1, wobei eine bauteilseitige Klebefläche (12, 12a,...) zum Auftragen des Klebemittels (8) aus einem strahlungsundurchlässigen Material besteht.

3. Vorrichtung nach Anspruch 1 oder 2, wobei die Klebeflächen (12, 12a,...) streifenartig ausgebildet ist.

4. Vorrichtung nach Anspruch 2 oder 3, wobei die Klebefläche (12, 12a,...) konturnah zu einem gegenüberliegenden Bauteilabschnitt (14, 14a,...) ist.

5. Vorrichtung nach einem der vorhergehenden Ansprüche, wobei der Bauteilträger (6) eine Vielzahl von Erhebungen (38a, 38b,...) zum Auftragen des Klebemittels (8) hat.

6. Vorrichtung nach einem der vorhergehenden Ansprüche, wobei die Erhebungen eine noppenartige Matrixstruktur ausbilden.

7. Vorrichtung nach einem der vorhergehenden Ansprüche, wobei zwei Strahlungsquellen (22, 24) gegenüber entgegengesetzten Flanken (26, 28,...) des Klebemittels (8) positioniert sind.

8. Vorrichtung nach Anspruch 1, wobei der Bauteilträger (6) ein Gitter (46) zum Auftragen des Klebemittels (8) hat.

9. Vorrichtung nach Anspruch 8, wobei die Strahlungsquelle (22, 24) an einer von dem Bauteil (4) abgewandten Seite des Gitters (46) positioniert ist.

10. Vorrichtung nach Anspruch 9, wobei zwei Strahlungsquellen (22, 24) vorgesehen sind und im Bereich der Strahlungsquellen (22, 24) jeweils eine Öffnung (58, 60) vorgesehen ist.

11. Vorrichtung nach einem der vorhergehenden Ansprüche, wobei der Bauteilträger (6) Abstandshalter (34a, 34b, 34c) zur Auflage des Bauteils (4) hat.

12. Verfahren zum Fixieren eines Bauteils (4) an einem Bauteilträger (6), mit den Schritten:
- Vorsehen eines strahlungsaktivierbaren Klebemittels (8) zwischen dem Bauteilträger (6) und dem Bauteil (4), und
- Positionieren des Bauteils (4) relativ zu dem Bauteilträger (6), **gekennzeichnet durch**
seitliches Bestrahlen des Klebemittels (8) mit einer elektromagnetischen Strahlung (30, 32), so dass das Klebemittel (8) seitlich und nicht **durch** die Klebefläche (12) hindurch bestrahlt wird.

13. Verfahren nach Anspruch 12, wobei zwischen dem Bauteil (4) und dem Bauteilträger (6) ein Klebespalt (20) mit einem Tiefen-Breiten-Verhältnis größer als 1 : 10, vorzugsweise von 1:10, eingestellt wird.

## Claims

1. A device for fixing a component (4) on a component-carrier (6), having a component-carrier (6) with an adhesive agent (8) that can be activated by radiation between the component-carrier (6) and the component (4) and having at least one radiation source (22, 24) that emits electromagnetic radiation (30, 32) to cure an adhesive agent (8) that is arranged between the component (4) and the component-carrier (6), **characterised in that** the radiation source (22, 24) is arranged in such a way that the radiation (30, 32) is directed at at least one flank (26, 28,...) of the adhesive agent (8) so that the adhesive agent (8) is irradiated laterally and not through the adhesion area (12).

2. A device according to claim 1, wherein an adhesion area (12, 12a,...), on the component side, for the application of the adhesive agent (8) consists of a material that is opaque to radiation.

3. A device according to claim 1 or 2, wherein the adhesion area (12, 12a,...) has a striated design.

4. A device according to claim 2 or 3, wherein the adhesion area (12, 12a,...) has contours close to an opposing component section (14, 14a,...).

5. A device according to one of the preceding claims, wherein the component-carrier (6) has a plurality of elevations (38a, 38b,...) for the application of the adhesive agent (8).

6. A device according to one of the preceding claims, wherein the elevations form a knob-like matrix structure.

7. A device according to one of the preceding claims, wherein two radiation sources (22, 24) are positioned with respect to opposite flanks (26, 28,...) of the adhesive agent (8).

8. A device according to claim 1, wherein the component-carrier (6) has a grid (46) for the application of the adhesive agent (8).

9. A device according to claim 8, wherein the radiation source (22, 24) is positioned on a side of the grid (46) that is remote from the component (4).

10. A device according to claim 9, wherein two radiation sources (22, 24) are provided, and a respective opening (58, 60) is provided in the region of the radiation sources (22, 24).

11. A device according to one of the preceding claims, wherein the component-carrier (6) has spacers (34a, 34b, 34c) for the support of the component (4).

12. Method for fixing a component (4) on a component-carrier (6), having the steps:
- provision of an adhesive agent (8) that can be activated by radiation between the component-carrier (6) and the component (4), and
- positioning of the component (4) relative to the component-carrier (6), **characterised by**
lateral irradiation of the adhesive agent (8) with electromagnetic radiation (30, 32) so that the adhesive agent (8) is irradiated laterally and not through the adhesion area (12).

13. Method according to claim 12, wherein an adhesive gap (20) is set between the component (4) and the component-carrier (6) having a depth-to-width ratio that is greater than 1 : 10, preferably of 1 : 10.

## Revendications

1. Dispositif de fixation d'un composant (4) sur un support de composant (6), avec un support de composant (6) pourvu d'un adhésif (8) activable par rayonnement entre le composant (4) et le support de composant (6), et avec au moins une source de rayonnement (22, 24), laquelle émet un rayonnement électromagnétique (30, 32) pour le durcissement, d'un adhésif (8) disposé entre le composant (4) et le support de composant (6), **caractérisé en ce que** la source de rayonnement (22, 24) est disposée de marnière à diriger le rayonnement (30, 32) vers au moins un flanc (26, 28, ...) de l'adhésif (8), si bien que l'adhésif (8) est irradié latéralement et non pas au travers de la surface de collage (12).

2. Dispositif selon la revendication 1, où une surface de collage (12, 12a, ...) pour l'application de l'adhésif (8) côté composant est constituée d'un matériau opaque au rayonnement.

3. Dispositif selon la revendication 1 ou la surface'de collage (12, 12a, ...) est réalisée sous forme de bande.

4. Dispositif selon la revendication 2 ou 3, où la surface de collage (12, 12a, ...) présente un contour ajusté à une partie de composant (14, 14a, ...) opposée.

5. Dispositif selon l'une des revendications précédentes, où le support de composant (6) est pourvu d'une pluralité de bosses (38a, 38b, ...) pour l'application de l'adhésif (8).

6. Dispositif selon l'une des revendications précédents, où les bosses forment comme une structure matrinielle à boutons.

7. Dispositif selon l'une des revendications précédentes, où deux sources de rayonnement (22, 24) sont disposées vis-à-vis de flancs (26, 28, ...) opposés de l'adhésif (8).

8. Dispositif selon la revendication 1, où le apport de composant (6) est pourvu d'un treillis (46) pour l'application de l'adhésif (8).

9. Dispositif selon la revendication 8, où la source de rayonnement (22, 24) est disposée du côté du treillis (46) distant du composant (4).

10. Dispositif selon la revendication 9, où deux sources de rayonnement (22, 24) sont prévues et où une ouverture (58, 60) est prévue à hauteur de chaque source de rayonnement (22, 24).

11. Dispositif selon l'une des revendications précédentes, où le support de composant (6) est pourvu d'écarteurs (34a, 34b, 34c) pour l'appui du composant (4) .

12. Procédé de fixation d'un composant (4) sur un support de composant (6), comprenant les étapes suivantes :
- fourniture d'un adhésif (8) activable par rayonnement entre le support de composant (6) et le composant (4), et
- disposition du composant (4) par rapport au support de composant (6), **caractérisé par**
l'irradiation latérale de l'adhésif (8) par un rayonnement (30, 32), si bien que l'adhésif (8) est irradié latéralement et non pas au travers de la surface de collage (12).

13. Procédé selon la revendication 12, où un interstice de collage (20) est ménagé entre le composant (4) et le support de composant (6) avec un rapport profondeur-largeur supérieur à 1:10, préférentiellement égal à 1:10.
